# EUROPÄISCHE PATENTSCHRIFT

(11) **EP 3 063 807 B1**
(45) Veröffentlichungstag und Bekanntmachung des Hinweises auf die Patenterteilung: **08.05.2019**
(21) Anmeldenummer: 14790093.0
(22) Anmeldetag: 28.10.2014
(51) Int. Cl.: H01M 2/16, H01M 4/62, H01M 10/052, H01M 10/0567, H01M 10/42, C03C 3/062

(54) **WIEDERAUFLADBARER LITHIUM-IONEN AKKUMULATOR**
RECHARGEABLE LITHIUM ION STORAGE BATTERY
ACCUMULATEUR RECHARGEABLE AUX IONS DE LITHIUM

(30) Priorität: 31.10.2013 DE 102013112015
(43) Veröffentlichungstag der Anmeldung: 07.09.2016
(73) Patentinhaber: Schott AG, 55122 Mainz (DE)
(72) Erfinder: KUNZE, Miriam, 31535 Neustadt am Rübenberge (DE); PEUCHERT, Ulrich, 55294 Bodenheim (DE); ROTERS, Andreas, 55118 Mainz (DE); DAHLMANN, Ulf, 84034 Landshut (DE); SCHUHMACHER, Joerg, 70806 Kornwestheim (DE)
(74) Vertreter: Witte, Weller & Partner Patentanwälte mbB
(86) Internationale Anmeldenummer: PCT/EP2014/073135
(87) Internationale Veröffentlichungsnummer: WO 2015/063096

(56) Entgegenhaltungen:
- EP-B1- 2 878 023
- WO-A1-2012/113794
- WO-A1-2013/045350
- WO-A1-2014/016039

## Beschreibung

Die Erfindung betrifft einen wiederaufladbaren Lithium-Ionen-Akkumulator, mit mindestens einer Zelle, in der zumindest eine positive Elektrode, eine negative Elektrode, ein Separator und ein Elektrolyt aufgenommen sind.

Lithium-Ionen-Akkumulatoren weisen mindestens eine Zelle auf, in der eine positive und eine negative Elektrode (Anode/Kathode), ein Separator, der den elektrischen Kurzschluss verhindert, und ein Elektrolyt aufgenommen sind. Bei dem Elektrolyten handelt es sich meist um einen Flüssigelektrolyten, seltener Polymerelektrolyt, der die Li-Ionen-Migration ermöglicht.

Lithium-Ionen-Zellen stellen grundsätzlich vorteilhafte Energiespeicher mit hoher Lebensdauer, geringer Selbstentladung und hoher spezifischer Speicherkapazität dar mit einem Betriebsfenster bei Normalbedingungen von ca. -40°C bis + 85°C.

Zukünftige Anwendungen von Lithium-Ionen-Akkumulatoren (insbesondere in Kraftfahrzeugen, stationären Anwendungen, E-Bikes und anderen Großanwendungen) erfordern eine Verbesserung der Akkumulatoren in Bezug auf Sicherheit, Kosten und Gewicht. Letzteres ist insbesondere im Hinblick auf eine Erhöhung der spezifischen Energie- bzw. Leistungsdichte erforderlich.

Auch die Lebensdauer des Akkumulators sowohl bei der Zyklisierung als auch bezüglich der allgemeinen Standzeit (kalendarische Lebensdauer) spielt eine wichtige Rolle. Die Lebensdauer beeinträchtigende Effekte sind, neben vielen anderen, beispielsweise die zunehmende Bildung einer Oberflächenschicht auf der Anode (Solid Electrolyte Interface (SEI)-Layer), mit der Konsequenz zunehmender Lithium-Defizienz oder Erhöhung des inneren Widerstandes.

Weiterhin ist die Degradation von Zellmaterialien oder Komponenten u.a. durch thermische Einflüsse ein wesentlicher die Lebensdauer beeinträchtigender Mechanismus. Das Leitsalz kann zerfallen und dadurch den Elektrolyten, den SEI und das Kathodenmaterial und dadurch bedingt auch das Anodenmaterial beschädigen

Beispielhafte Reaktionen bzw. Reaktionsgleichgewichte eines Fluor-haltigen Leitsalzes sind:

*LiPF*₆ ↔ *LiF* ↓ +*PF*₅

*PF*₅ + *H*₂*O* ↔ 2*HF* + *POF*₃

In der Regel werden Additive dem Flüssigelektrolyten zugesetzt, um diese und auch andere störende zellchemische Prozesse zu unterbinden. So werden u.a. Tieftemperatur-Additive, SEI-Formation-Enhancer bzw. -Controller, Flammschutzadditive, Benetzungsadditive, Anionenrezeptoren, Überladeadditive, Wasser/Säurefänger, Additive für eine glatte Li-Abscheidung, Leitsalzstabilisierer usw. zugegeben. Bei den Additiven handelt es sich in der Praxis ausschließlich um organische, aromatische oder metallorganische Verbindungen bzw. Moleküle, welche oft Halogene, Stickstoff- oder Phosphorgruppen führen. Darüber hinaus sind Zusätze mit organischen Anteilen teilweise toxisch - sowohl im Handling bei der Herstellung, als auch bei unkontrollierter Anwendung. Sie sind zudem teuer und leicht entflammbar bzw. zumindest nur sehr wenig temperaturbeständig oder leicht löslich.

Beispielhaft für Leitsaltzstabilisierer sei an dieser Stelle genannt (aus Zhang, Journal of Power Sources 162, (2006), 1379-1394):

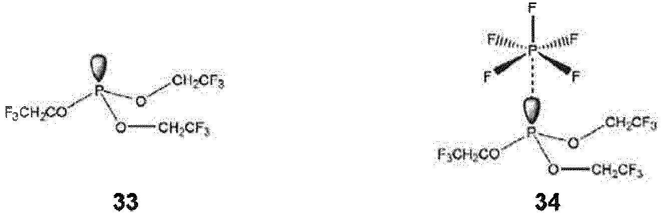

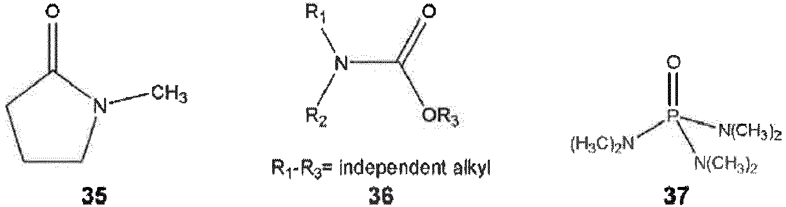

Ein weiterer Nachteil der derzeitigen Additivlösungen ist die fehlende Flexibilität bezüglich der Integration der genannten Additive. In Form einer Flüssigkeitskomponente oder alternativ in Form eines im Elektrolyt komplett löslichen Festkörpers ist es bei Bedarf nicht möglich, die Wirkung lokal und damit "vor Ort" stärker wirksam anzubieten. Ein weiteres Problem der Zugabe flüssiger Additive ist die Minderung der Leitfähigkeit des Elektrolyten, da Viskositäten und Konzentrationen des Elektrolyts geändert werden.

Aus der WO 2013/045350 A1 ist ein wiederaufladbarer Lithium-Ionen-Akkumulator bekannt, dem ein Additiv aus einem Material auf Glasbasis zugesetzt wird, um die Hochraten-Fähigkeit bei hoher Energiedichte zu verbessern. Hierzu wird ein Glas oder eine Glaskeramik zugesetzt, worin vorzugsweise folgende Bestandteile (in Gew.-% auf Oxidbasis) enthalten sind:

| | |
|---|---|
| SiO₂ | 20 - 75 |
| Al₂O₃ | 0 - 45 |
| B₂O₃ | 0 - 20 |
| Li₂O | 0 - 20 |
| R₂O | < 15% |
| RO | 5 - 75, |
| MgO | 0 - 59 |
| CaO | 0 - 69 |
| BaO | 0 - 75 |
| SrO | 0 - 25 |
| ZrO₂ | 0 - 17 |
| ZnO | 0 - 5 |
| P₂O₅ | 0 - 10 |
| F | 0 - 2 |

Läutermittel in üblichen Mengen von bis zu 2%,
wobei R₂O der Summengehalt an Natriumoxid und Kaliumoxid ist, wobei RO der Summengehalt an Oxiden des Typs MgO, CaO, BaO, SrO, ZnO ist, und wobei außer zufälligen Verunreinigungen kein Titanoxid enthalten ist.

In der Praxis enthält dieses Material einen hohen Anteil von BaO, zusammen mit SiO2 und ggf. Al₂O₃ und B₂O₃.

Dieses Additiv, das u.a. auch in Pulverform zugesetzt werden kann, ist speziell auf die Verbesserung der Hochratenfähigkeit zugeschnitten.

Aus der WO 2012/113794 A1 ist ein weiteres Additiv auf Glasbasis bekannt, das einem Lithium-Ionen-Akkumulator zugesetzt wird, das in Kontakt mit dem Elektrolyten unter Beibehaltung der Zellfunktion auslaugbar ist, um insbesondere ein HF-Gettering zu ermöglichen. Das Material enthält zumindest folgende Bestandteile (in Gew.-% auf Oxidbasis):

| | |
|---|---|
| SiO₂ | 45 - 60 |
| Al₂O₃ | 5 - 30 |
| B₂O₃ | 5 - 30. |

Zusätzlich kann insbesondere BaO mit einem Gewichtsanteil von 20 bis 30 % vorhanden sein.

Dieses Additiv ist insbesondere zum HF-Gettering vorgesehen.

Ferner sei auf die WO 2014/016039 A1 hingewiesen, die zwar prioritätsälter als die vorliegende Anmeldung ist, jedoch nicht vorveröffentlicht ist.

Aus der älteren, jedoch nicht vorveröffentlichten EP 2 878 023 B1 ist ferner ein Additiv in Form eines glasbasierten Materials für einen wiederaufladbaren Lithium-Ionen-Akkumulator mit Flüssigelektrolyten oder Polymerelektrolyten zur Stabilisierung des Leitsalzes im Elektrolyten bekannt, wobei das glasbasierte Material aus Glas oder einer Glaskeramik besteht und zumindest folgende Bestandteile (in Gew.-% auf Oxidbasis) aufweist:

| | |
|---|---|
| SiO₂ | 20 - 40 |
| BaO | 40 - 80 |
| ZrO₂ | 0 - 8 |
| CaO | 0 - 30 |
| MgO | 0 - 30 |
| MgO+BaO+CaO | ≥ 30 |
| NiO | 0 - 10 |
| PbO | 0 - 10 |
| ZnO | 0 - 10 |
| F | 0 - 5. |

Vor diesem Hintergrund liegt der Erfindung die Aufgabe zu Grunde, ein kostengünstiges, nicht toxisches, temperaturstabiles Additiv zur Verbesserung der Leistungsfähigkeit beim flexiblen Einsatz in allen Bereichen eines wiederaufladbaren Lithium-Ionen-Akkumulators mit Flüssigelektrolyten anzugeben. Insbesondere soll das Additiv eine thermische Stabilisierung des Leitsalzes gewährleisten.

Diese Aufgabe wird durch ein glasbasiertes Material als pulverförmiges Additiv für einen wiederaufladbaren Lithium-Ionen-Akkumulator mit Flüssigelektrolyten zur Stabilisierung des Leitsalzes im Elektrolyten gelöst, wobei das glasbasierte Material aus Glas oder einer Glaskeramik besteht und zumindest folgende Bestandteile (in Gew.-% auf Oxidbasis) aufweist:

| | |
|---|---|
| SiO₂ | 15 - 45 |
| BaO | 10 - 80 |
| ZrO₂ | 0 - 15 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |

Läutermittel in üblichen Mengen von bis zu 2 Gew.-%, wobei

| | |
|---|---|
| Li₂O + Al₂O₃ | ≥0,1 - 35 |
| Li₂O | 0,05-25 und |
| Al₂O₃ | 0,05-10, |

oder

| | |
|---|---|
| Li₂O + P₂O₅ | ≥0,1 - 45 |
| Li₂O | 0,05 - 25 und |
| P₂O₅ | 0,05 - 20, |

oder

| | |
|---|---|
| P₂O₅ + Al₂O₃ | ≥0,1 - 30 |
| P₂O₅ | 0,05 - 20 und |
| Al₂O₃ | 0,05-10, |

wobei das Additiv pulverförmig mit einer Oberfläche nach BET von mindestens 10 m²/g ausgebildet ist.

Die Aufgabe der Erfindung wird auf diese Weise vollkommen gelöst.

Während beim Stand der Technik durch eine Zugabe von flüssigen Additiven zum Elektrolyten zu einer deutlichen Verringerung der Leitfähigkeit des Elektrolyten kommt, wird durch die erfindungsgemäße Zugabe des glasbasierten Materials als pulverförmiges Additiv der Flüssigelektrolyt in seiner Zusammensetzung nicht verändert, wie bei einem flüssigen Additiv.

Bei dieser Ausführung und bei den nachfolgenden Ausführungen ist das ZrO₂ als Netzwerkwandler angesehen.

Bei der Verwendung eines Materials auf Glasbasis handelt es sich um einen anorganischen Zusatz, der nicht toxisch, temperaturstabil, langzeitstabil sowie chemisch und elektrochmisch stabil in der Batteriechemie ist. Außerdem lässt sich eine sehr kostengünstige Lösung erzielen. Das Material lässt sich auf den jeweiligen Anwendungszweck maßschneidern

Erfindungsgemäß wurde erkannt, dass Komponenten im Additiv vorhanden sein müssen oder an der Oberfläche des Additives vorhanden sein müssen oder sich aus dem Additiv herauslösen , die das Fluor-haltige Anion des Leitsalzes und auch dessen Zerfallsprodukte, z.B. das PF₆-Anion und/oder das PF₅-Molekül stabilisieren.

Da es sich beim PF₅-Molekül um eine starke Lewis-Säure handelt, wird eine Stabilisierung mit Lewis-Basen erreicht. Lewis-Basen sind im Glas Sauerstoff-Atome, die an Kationen mit einer Sauerstoff-Polarisierbarkeit gebunden sind, die eine hohe optische Basizität aufweisen. (Im Glas wird das Maß des Lewis-Säure/Base-Prinzips über die optische Basizität angegeben.)

Für das Glaspulver ergibt sich, dass es Komponenten enthalten muss, die basische Glasnetzwerk-Wandler sind. Basierend auf der Theorie von Duffy und Ingram weisen solche basische Glasnetzwerk-Wandler eine optische Basizität Λ>0,7 auf. Die optische Basizität des Glases ist nicht ausschlaggebend, da nur ein Anteil eines Netzwerkwandlers mit optischer Basizität Λ>0,7, wobei die optische Basizität so groß wie möglich sein soll. Hierzu zählen u.a. die Oxide von: Li, Na, K, Ba, Ca, Sr, Pb, Zn, Ag, Cd. Wegen der hohen optischen Basizität besonders bevorzugt sind hierbei die Oxide von Ba, Li, Zr, da die optischen Basizitäten Λ mit 1,22 bzw. 0,81 bzw. 0,90 ziemlich hoch liegen (vgl. Journal of the University of Chemical Technology and Metallurgy 45, 3, 2010, Tab. 4a).

Tab. 1 zeigt optische Basizitäten Λ nach Duffy, nach der Brechungsindex-Theorie n₀, nach der Energiebandlücke-Theorie E_{g} und nach Labouteiller und Courtine (LC)., aus "Journal of the University of Chemical Technology and Metallurgy 45, 3, 2010.

Nach Duffy wird die optische Basizität von Oxiden mit Hilfe der UV-Sonden lonenspektroskopie bestimmt. Im Spektrum wird eine starke Mode dem Elektronenübergang d10s2p0 zugeschrieben. Bei unterschiedlichen Oxiden ist diese Mode weniger stark ausgeprägt als auch verschoben und wurde von Duffy und Ingram mit der Polarisierbarkeit des Oxides und damit der optischen Basizität in Beziehung gesetzt. Genauso kann der Brechungsindex zur Bestimmung der optischen Basizität herangezogen werden, da hier eine intrinsische Wechselbeziehung zwischen Brechungsindex und elektronischer Polarisierbarkeit des Oxidions besteht. Gleiches gilt für die Bestimmung der optischen Basizität über die Energiebandlücke.

**Tab. 1**

| Oxid | Λ(Duffy) | Λ(n₀) | Λ(E_{g}) | Λ(LC) |
|---|---|---|---|---|
| BeO | | | | 0,48 |
| B₂O₃ | 0,42 | 0,43 | | 0,42 |
| P₂O₅ | 0,48 | | | 0,33 |
| SiO₂ | 0,48 | 0,48 | 0,52 | 0,48 |
| Al₂O₃ | 0,61 | | | 0,60 |
| MgO | 0,78 | 0,69 | 0,67 | 0,78 |
| GeO | 0,61 | 0,70 | | 0,54 |
| Ga₂O₃ | 0,71 | 0,71 | 0,80 | |
| Li₂O | 0,81 | 0,87 | | 0,48 |
| CaO | 1,00 | 1,00 | 0,95 | 1,00 |
| Sc₂O₃ | 0,91 | | 0,87 | |
| TiO₂ | 1,00 | 0,96 | 0,91 | 0,75 |
| V₂O₅ | | | 1,04 | 0,63 |
| MnO | 1,00 | 0,94 | 0,96 | 0,96 |
| Fe₂O₃ | | 1,04 | 0,99 | 0,77 |
| CoO | | | 0,98 | 0,98 |
| NiO | | 0,91 | 0,92 | 0,91 |
| CuO | | 1,08 | 1,11 | 0,56 |
| ZnO | 0,95 | 1,03 | 1,13 | 0,92 |
| Y₂O₃ | | 0,99 | | 0,72 |
| ZrO₂ | 0,90 | 0,86 | 0,79 | 0,71 |
| Nb₂O₅ | | | 1,05 | 0,61 |
| MoO₃ | | 1,07 | 1,07 | 0,52 |
| In₂O₃ | 0,95 | | 1,07 | |
| SnO₂ | | 0,79 | 0,91 | 0,87 |
| TeO₂ | | 0,99 | 0,96 | |
| CeO₂ | | | 1,01 | 0,65 |
| Ta₂O₃ | | 1,05 | 0,94 | |
| WO₃ | | | 1,04 | 0,51 |
| Na₂O | 1,10 | | | 1,15 |
| SrO | 1,10 | 1,10 | 1,18 | 1,10 |
| CdO | | 1,10 | 1,13 | 1,12 |
| Sb₂O₃ | | 1,14 | 1,22 | |
| Cs₂O | 1,54 | | | <1,7 |
| BaO | 1,15 | 1,21 | 1,23 | 1,20 |
| PbO | | 1,19 | 1,17 | |
| Bi₂O₃ | | | 1,19 | 1,19 |

Erfindungsgemäß sollte das glasbasierte Material also größere Mengen an Oxiden von vorzugsweise Ba, Li und/oder Zr (Netzwerkwandler), sowie ggf. weitere Zusätze an Oxiden von Na, K, Ca, Sr, Pb, Zn, Ag, Cd enthalten.

Bei der obigen erfindungsgemäßen Zusammensetzung ist dem durch einen Mindestanteil von BaO und die zusätzliche Bedingung von MgO+BaO+CaO +Li₂O+ZrO₂ ≥ 20 Rechnung getragen.

Die Bereitstellung von Elektronen im Glasnetzwerk zur Leitsalzstabilisierung wird besonders durch sogenannte nicht-brückenbindende Sauerstoffe hergestellt. Weiterhin ist das Maß der Polarisierbarkeit ein Hinweis auf die Fähigkeit, Elektronen im Oxid bereitzustellen. Damit das Leitsalz über Elektronen auf dem oxidischen Netzwerk stabilisiert wird, muss das Glasnetzwerk mit Netzwerkwandlern aufgetrennt werden. MgO+BaO+CaO+Li₂O+ZrO₂ ≥ 20 sind Netzwerkwandler (ZrO₂ wurde als Netzwerkwandler definiert) und zeichnen sich durch ihre hohe Basizität aus. Um einen genügenden Erhalt/Stabilisierung des Leitsalzes zu gewährleisten, müssen ausreichend freie Elektronen bereitgestellt werden. Die hohe Basizität der genannten Oxide, verbunden mit ihrem relativ hohen Anteil im Glas stellt dieses sicher.

Bei der obigen erfindungsgemäßen Zusammensetzung ist bei (Li₂O + Al₂O₃), (Li₂O + P₂O₅) zu beachten, dass Li₂O hat eine ausreichende Basizität hat und daher im geeigneten Gleichgewicht zu den nicht genügend basischen Oxiden Al2O3 und P₂O₅ bemessen werden muss.

Bezüglich (P₂O₅ + Al₂O₃) ergibt sich: Die optische Basizität von P₂O₅ und Al₂O₃ ist unterhalb der Grenzwerte, die bevorzugt sind. Daher müssen diese in ihrer Summe beschränkt sein, um eine Leitsalzstabilisierung zu gewährleisten.

Durch eine Reihe von Experimenten wurde nachgewiesen, dass ein typischer Flüssigelektrolyt für einen Lithium-Ionen-Akkumulator durch die Zugabe von glasbasiertem Pulver der obigen Zusammensetzung in seiner Langzeitstabilität deutlich verbessert wurde.

Durch die erfindungsgemäße Leitsalzstabilisierung wird das Kathodenmaterial nicht mehr durch dessen Zersetzungsprodukte zerstört. Die aus der Kathode herausgelösten Kationen diffundieren nicht mehr zur Anode und zerstören diese. Ferner wird auch der SEI auf der Anode nicht durch Zersetzungsprodukte, wie z.B. eine zunehmende Bildung von LiF, verändert, so dass die Anodenreaktion beim Laden und Entladen des Akkumulators nicht gestört wird.

Soweit im Rahmen dieser Anmeldung Zusammensetzungen in der Form angegeben sind, dass darin bestimmte Bestandteile enthalten sind oder dass sie bestimmte Bestandteile aufweisen, sind diese immer so zu verstehen, dass beliebige weitere Bestandteile darin enthalten sein können (offene Zusammensetzung).

In einer weiteren Ausführungsform der Erfindung sind die angegebenen Zusammensetzungen jedoch auch so zu verstehen, dass nur die jeweils angegebenen Bestandteile enthalten sind (geschlossene Zusammensetzung), abgesehen von unvermeidbaren Verunreinigungen, die durch die Natur der Glasherstellung bedingt sind. Je nach der Reinheit der verwendeten Rohstoffe sind solche unvermeidbaren Verunreinigungen auf maximal 1 Gew.-%, vorzugsweise auf 0,5 Gew.-%, weiter vorzugsweise auf 0,1 Gew.-%, oder sogar auf 0,05 Gew.-% beschränkt.

Soweit im Rahmen dieser Anmeldung Zusammensetzungen in der Form angegeben sind, dass sie aus bestimmten Bestandteilen bestehen, sind diese Zusammensetzungen immer so zu verstehen, dass darin nur die angegebenen Bestandteile enthalten sind (geschlossene Zusammensetzung), allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Gew.-%, vorzugsweise auf 0,5 Gew.-%, weiter vorzugsweise auf 0,1 Gew.-%, oder sogar auf 0,05 Gew.-% beschränkt.

Soweit im Rahmen dieser Anmeldung in Ausführungsbeispielen durch Aufzählung bestimmter Bestandteile angegeben sind, sind diese Angaben als geschlossene Zusammensetzungen zu verstehen, allerdings mit der Maßgabe, dass unvermeidbare Verunreinigungen, die durch die Natur der Glasherstellung bedingt sind, enthalten sein können. Je nach der Reinheit der verwendeten Rohstoffe, sind solche unvermeidbaren Verunreinigungen auf maximal 1 Gew.-%, vorzugsweise auf 0,5 Gew.-%, weiter vorzugsweise auf 0,1 Gew.-%, oder sogar auf 0,05 Gew.-% oder 0,01 Gew.-% beschränkt.

Bevorzugt ist das Additiv als pulverförmiges Additiv in den Akkumulator integriert. Auf diese Weise ist über eine hohe Oberfläche die Wirkung des Additivs auf das Leitsalz besonders hoch.

In Pulverform lässt sich das Additiv auch etwa unter Verwendung eines Kunststoffbinders etwa in folgender Weise integrieren: als Beschichtung eines Separators, als Teil einer Elektrode des Akkumulators, oder als Beschichtung auf der Oberfläche der Elektrode oder als Beschichtung eines den Akkumulator umschließenden Gehäuses. Auf diese Weise bleibt die hohe wirksame Oberfläche erhalten.

Gemäß einer weiteren Ausgestaltung der Erfindung
ist Al₂O₃ größer 0,1, bevorzugt größer 0,5,
wobei bevorzugt P₂O₅ größer 0,1, besonders bevorzugt größer 0,5, und wobei bevorzugt Li₂O bevorzugt größer 0,08, besonders bevorzugt größer 0,1.

Gemäß einer weiteren Ausgestaltung der Erfindung enthält das glasbasierte Materials zumindest folgende Bestandteile (in Gew.-% auf Oxidbasis):

| | |
|---|---|
| SiO₂ | 20 - 40 |
| BaO | 40 - 80 |
| ZrO₂ | 0 - 8 |
| CaO | 0 - 30 |
| MgO | 0 - 30 |
| MgO+BaO+CaO +Li₂O+ZrO₂ | > 30 |
| NiO | 0 - 10 |
| PbO | 0 - 10 |
| ZnO | 0 - 10 |
| F | 0 - 5, |

Läutermittel in üblichen Mengen von bis zu 2 Gew.-%, wobei

| | |
|---|---|
| Li₂O + Al₂O₃ | ≥0,1 - 35 |
| Li₂O | 0,05-25 und |
| Al₂O₃ | 0,05-10 |
| oder | |
| Li₂O + P₂O₅ | ≥0,1 - 45 |
| Li₂O | 0,05 - 25 und |
| P₂O₅ | 0,05 - 20 |
| oder | |
| P₂O₅ + Al₂O₃ | ≥0,1 - 30 |
| P₂O₅ | 0,05 - 20 und |
| Al₂O₃ | 0,05-10. |

Gemäß einer weiteren Ausgestaltung der Erfindung enthält das glasbasierte Materials zumindest folgende Bestandteile (in Gew.-% auf Oxidbasis):

| | |
|---|---|
| SiO₂ | 15 - 45 |
| BaO | 40 - 80 |
| ZrO₂ | 0 - 15 |
| CaO | 0 - 30 |
| MgO | 0 - 30 |
| MgO+BaO+CaO +Li₂O+ZrO₂ | > 30 |
| NiO | 0 - 10 |
| PbO | 0 - 10 |
| ZnO | 0 - 10 |
| F | 0 - 5, |

Läutermittel in üblichen Mengen von bis zu 2 Gew.-%,
wobei

| | |
|---|---|
| Li₂O + Al₂O₃ | ≥0,1 - 35 |
| Li₂O | 0,05-25 und |
| Al₂O₃ | 0,05-10 |
| oder | |
| Li₂O + P₂O₅ | ≥0,1 - 45 |
| Li₂O | 0,05 - 25 und |
| P₂O₅ | 0,05 - 20 |
| oder | |
| P₂O₅ + Al₂O₃ | ≥0,1 - 30 |
| P₂O₅ | 0,05 - 20 und |
| Al₂O₃ | 0,05-10. |

Gemäß einer weiteren Ausgestaltung der Erfindung enthält das glasbasierte Materials zumindest folgende Bestandteile (in Gew.-% auf Oxidbasis):

| | |
|---|---|
| SiO₂ | 15 - 45 |
| RO | 40 - 80 |
| ZrO₂ | 0 - 15 |

Läutermittel in üblichen Mengen von bis zu 2 Gew.-%,
wobei
R = Ba oder Mg oder Ca,
wobei

| | |
|---|---|
| Li₂O + Al₂O₃ | ≥0,1 - 35 |
| Li₂O | 0,05-25 und |
| Al₂O₃ | 0,05-10 |
| oder | |
| Li₂O + P₂O₅ | ≥0,1 - 45 |
| Li₂O | 0,05 - 25 und |
| P₂O₅ | 0,05 - 20 |
| oder | |
| P₂O₅ + Al₂O₃ | ≥0,1 - 30 |
| P₂O₅ | 0,05 - 20 und |
| Al₂O₃ | 0,05-10. |

Gemäß einer weiteren Ausgestaltung der Erfindung werden als Läutermittel insbesondere SnO₂, As₂O₃, Sb₂O₃, Schwefel oder CeO₂ verwendet.

Soweit polyvalente Läutermitteln verwendet werden, wird deren Gehalt vorzugsweise auf höchstens 0,1 Gew.-%, weiter bevorzugt auf höchstens 0,05 Gew.-% begrenzt.

Weiter bevorzugt wird auf den Zusatz von Läutermitteln vollständig verzichtet.

Gemäß einer weiteren Ausgestaltung der Erfindung beträgt der Gehalt an Oxiden von Fe, Ni, Cu, Bi jeweils 0,1 Gew.-%, vorzugsweise höchstens 0,05 Gew.-%.

Gemäß einer weiteren Ausgestaltung der Erfindung ist das Additiv zur thermischen Stabilisierung des Elektrolyten bis zu 50 K oberhalb der Verdampfungstemperatur des Elektrolytlösemittels oder der Elektrolytlösemittelmischung, insbesondere bis 400 °C, geeignet.

Zur Lebensdauer- und Performanceverbesserung wird das Additiv in einer Standard-Lithium-Ionen Batterie, Hochenergie-Lithium-Ionen Batterie und Hochleistungs-Lithium-Ionen Batterie integriert. Letztere werden durch den Einsatz von Hochvolt- und Hochkapazität-Elektrodennmaterialien u.a. auch in Form von Nanomaterialien erreicht.

Bei der positiven Elektrode handelt es sich vorsugsweise um mindestens ein Lithium-haltiges Übergangsmetalloxid, Lithium-haltiges Übergangsmetallphosphat oder Lithium-haltiges Übergangsmetall Fluorosilikat. Die Übergangsmetalle enthalten mindestens eines der nachstehenden Elemente Mn, Co, Cr, Fe, Ni, V, Ti, Cr. Dotierungen mit weiteren polyvalenten Elementen sind möglich. Bevorzugt werden B, Al Mg, Ga, Si. Bevorzugte Kathodematerialien sind Lithium-Übergangsmetalloxide LiCoO₂, LiMn₂O₄, LiNi_{0.80}Co_{0.15}Al_{0.05}O₂, LiFePO₄, LiMnPO₄, and LiNi_{1/3}Mn_{1/3}Co_{1/3}O₂.

Hochvolt-Kathodenmaterialien werden für den Bau von Hochenergie-Batterien eingesetzt, bei diesen handelt es sich vorzugsweise ebenfalls um mindestens ein Lithium-haltiges Übergangsmetalloxid, Lithium-haltiges Übergansmetallphosphat. Beispiele sind LiMnzNi1-zO2 (0<z<1) (inkl. LiMn0.5Ni0.5O2), LiCoPO4, LiNiPO4

Die negative Elektrode für eine Standard-Lithium-Ionen Batterie, Hochenergie-Lithium-Ionen Batterie oder Hochleistungs-Lithium-Ionen Batterie besteht mindestens aus einem Material, welches Lithiumionen interkalieren, legieren oder einlagern kann. Hierzu zählen Metalle und deren Lithium-haltigen Legierungen, Metalloxide, carbonatische Materialien und Lithium-Metalloxide. Beispiele sind u.a. Graphite und Ruße, LiMnO₂ und Li₄Ti₅O₁₂, Si, Sn, In, LiAl, LiZn, Li₄Si, Li_{4.4}Sn, LiC₆, SnO, In₂O und ZnO.

Bei dem Elektrolyten handelt es sich vorzugsweise um einen Flüssigelektrolyten aus einer Mischung eines oder mehrerer nicht-wässriger, wasserfreier, aprotischer, bevorzugt carbonatischer Lösemittel, mit mindestens einem Fluor-haltigen Leitsalz. Bevorzugt wird LiPF₆ als Leitsalz verwendet, vorzugsweise etwa in einer Mischung aus Ethylencarbonat und Diethylcarbonat.

Weitere Fluor-haltige Leitsalze für können beispielhaft sein LiBF₄, LiAsF₆, LiClO₄, LiB (C₆H₅)₄, LiCH₃SO₃, LiCF₃ SO₃, LiN(SO₂ CF₃)₂, LiN(SO₂CF₃)₃, LiAlCl₄, LiSbF₆, Li [(OCO)₂]₂B, LiDFOB, LiCl, und LiBr.

Lösemittel für sekundärde Lithium-Ionen Batterien sind nicht-wässrig, aprotisch und organisch. Grundsätzliche Lösemittel sind Carbonate, Carboxylate, Ether, Lactone, Sulfone, Nitrile, Phosphate und ionische Flüssigkeiten. Als Lösemittel kommen beispielhaft in Frage: Propylencarbonat (PC), Ethylencarbonat (EC), Butylencarbonate (BC), Dimethylcarbonat (DMC), Diethylcarbonat (DEC), Vinylenecarbonat (VC), Methylethylcarbonat (EMC), 1, 2- Dimethoxyethan (DME), 1, 2-Diethoxyethan (DEE), gamma-Butyrolacton (gamma-BL), Sulfolan, Acetonitril, Adiponitril, N-Methyl-2-pyrrolidon (NMP), Dimethylsulfoxid (DMSO), Ethylacetat (EA), 1,3-Dioxolan (DOL), Tetrahydrofuran (THF), Tetra(ethylenglycol)-dimethylether (TEGDME), Tri(ethylenglycol)dimethyl (TEGD). Grundsätzlich bevorzugt ist die Verwendung von PC, EC, gamma-BL, DMC, DEC, EMC oder DME, oder Mischungen daraus.

Gemäß einer weiteren Ausgestaltung der Erfindung weist das pulverförmige Additiv eine Oberfläche nach BET von mindestens 5 m²/g, besonders bevorzugt von mindestens 10 m²/g auf.

Mit einer derartig großen Oberfläche ergibt sich gute Reaktionsfreudigkeit.

Es versteht sich ferner, dass die vorstehend genannten und die nachstehend noch zu erläuternden Merkmale der Erfindung nicht nur in der jeweils angegebenen Kombination, sondern auch in anderen Kombinationen oder in Alleinstellung der Erfindung verwendbar sind, ohne den Rahmen der Erfindung zu verlassen.

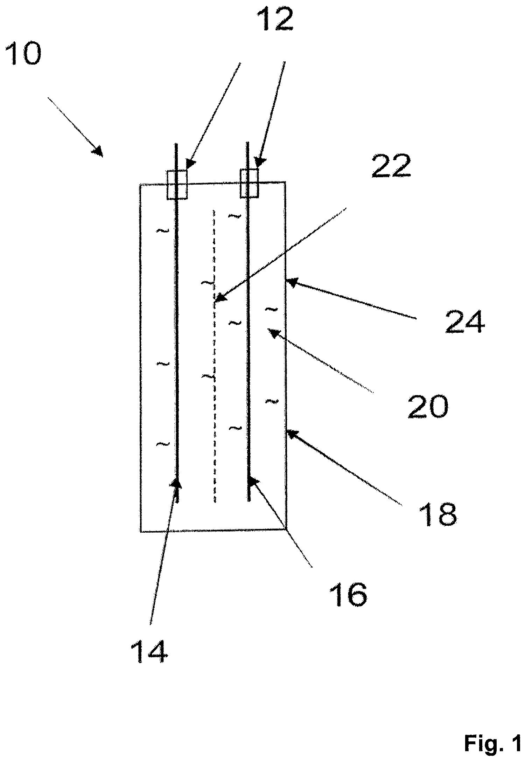

Die Erfindung wird nachfolgend anhand von Ausführungsbeispielen, teilweise im Zusammenhang mit der Zeichnung, näher beschrieben. Die Zeichnung weist als einzige Figur die Fig. 1 auf, die eine LIB-Zelle in schematischer Darstellung zeigt.

In Fig. 1 ist eine LIB-Zelle schematisch dargestellt und insgesamt mit 10 bezeichnet. Die LIB-Zelle 10 weist ein Gehäuse 18 mir zwei Elektrodendurchführungen 12 auf. Die Elektrodendurchführungen sind mit einer ersten Elektrode 14, die aus Cu besteht und mit Anodenmaterial beschichtet ist, bzw. mit einer zweiten Elektrode 16 verbunden, wobei es sich um eine mit Kathodenmaterial beschichtete Al-Ableiterfolie handeln kann. Zwischen den Elektroden befindet sich ein Separator 22, bei dem es sich um eine Polymerfolie handeln kann, die mit Glaspartikeln beschichtet sein kann. Der Innenraum des Gehäuses 18 ist mit Elektrolytflüssigkeit 20 gefüllt.

### Beispiele

In Tab. 2 sind eine Reihe von Beispielen zusammengefasst (Vergleichsbeispiele sind mit "VB" gekennzeichnet, Beispiele mit "AB").

Durch die Instabilität des LiPF₆-Salzes in Standardelektrolyten für LIB finden weitreichende Reaktionen der Zerfallsprodukte mit den Elektrolytlösemitteln statt. Die Zerfallsreaktion LiPF₆ → LiF + PF₅ findet bereits bei Raumtemperatur statt. Beschleunigt wird die Reaktion bei erhöhter Temperatur. Diese Zerfalls- und Nachfolgereaktionen lassen sich optisch durch eine Braunfärbung erkennen.

In den nachfolgenden Beispielen gemäß Tab. 2 wurden hierzu auf 0,38g Pulver (d50 = 1µm) 50mL Elektrolyt (EC/DMC 1M LiPF₆) gegeben. Ohne Luftkontakt werden die Proben mehrere Wochen bei 60°C gelagert. Das Pulvermaterial wurde zuvor bei unterschiedlichen Temperaturen (60°C, 200°C und 400°C, jeweils für 4h) getrocknet. Im Falle der Reaktion des Elektrolyten wird eine Farbänderung der Elektrolytlösung beobachtet (Braunfärbung). Erfolgt keine Farbänderung, so bewirkt das Pulvermaterial eine Stabilisierung des Elektrolyten.

Eine Farbänderung des reinen Elektrolyten zeigt, dass sich das Leitsalz zersetzt hat. Die Zersetzungsprodukte, wie PF5, reagieren mit den Elektrolytlösemitteln, zersetzen diese und es bilden sich Komplexe, die die Farbänderung hervorrufen. Wenn keine Farbänderung stattfindet, heißt es, dass das Salz sich nicht zersetzt und die Stabilisierung durch die Glaszugabe funktioniert. Bei der Zugabe von Al₂O₃ wurde der Elektrolyt noch dunkler, was darauf hindeutet, dass zum einen keine Stabilisierung stattfindet, aber auch, dass die Zersetzung beschleunigt ist. Generell lässt sich sagen: je dunkler die Lösung desto stärker hat sich der Elektrolyt zersetzt.

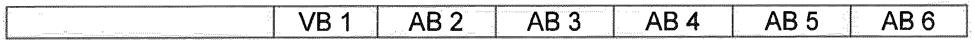

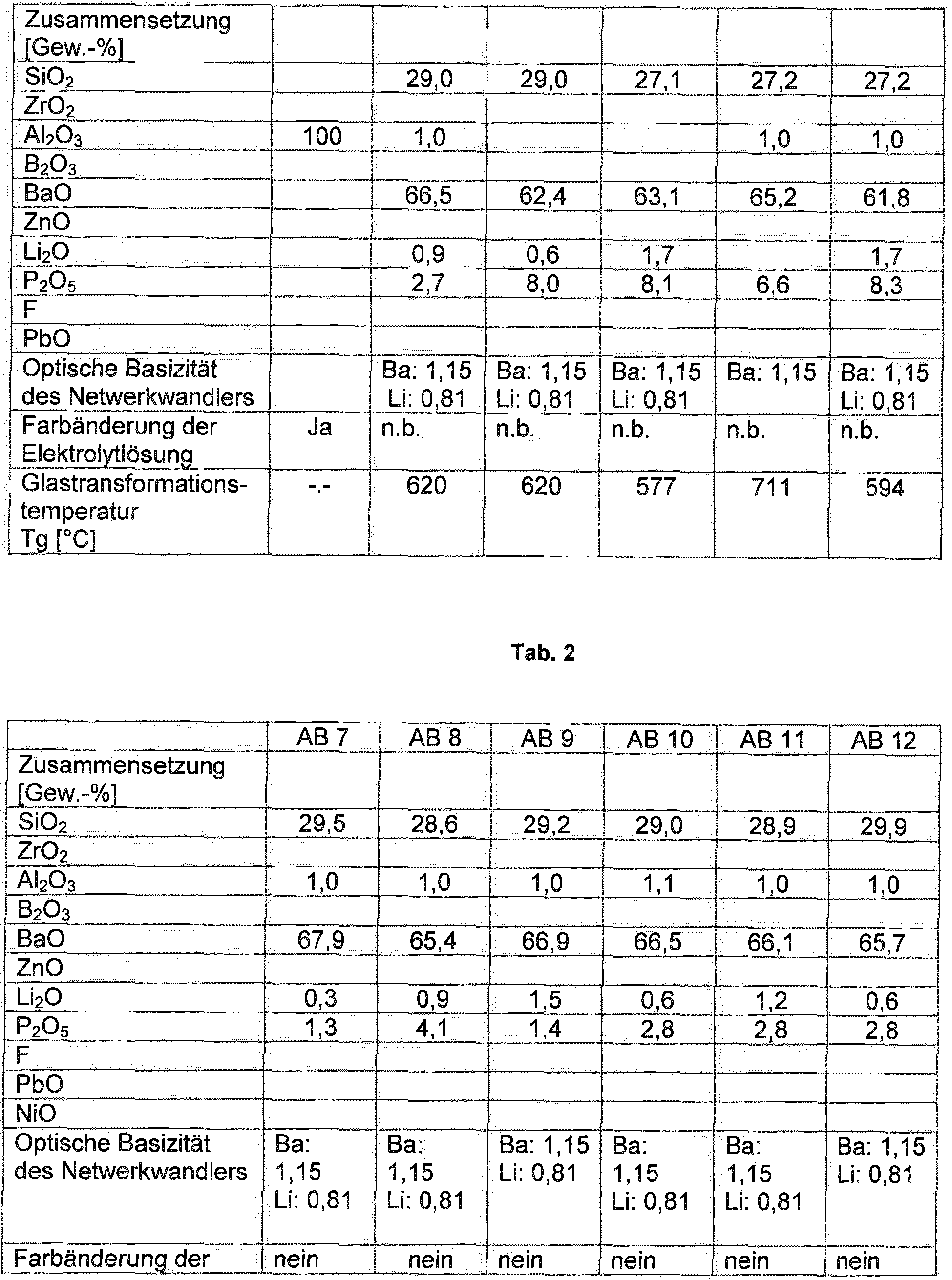

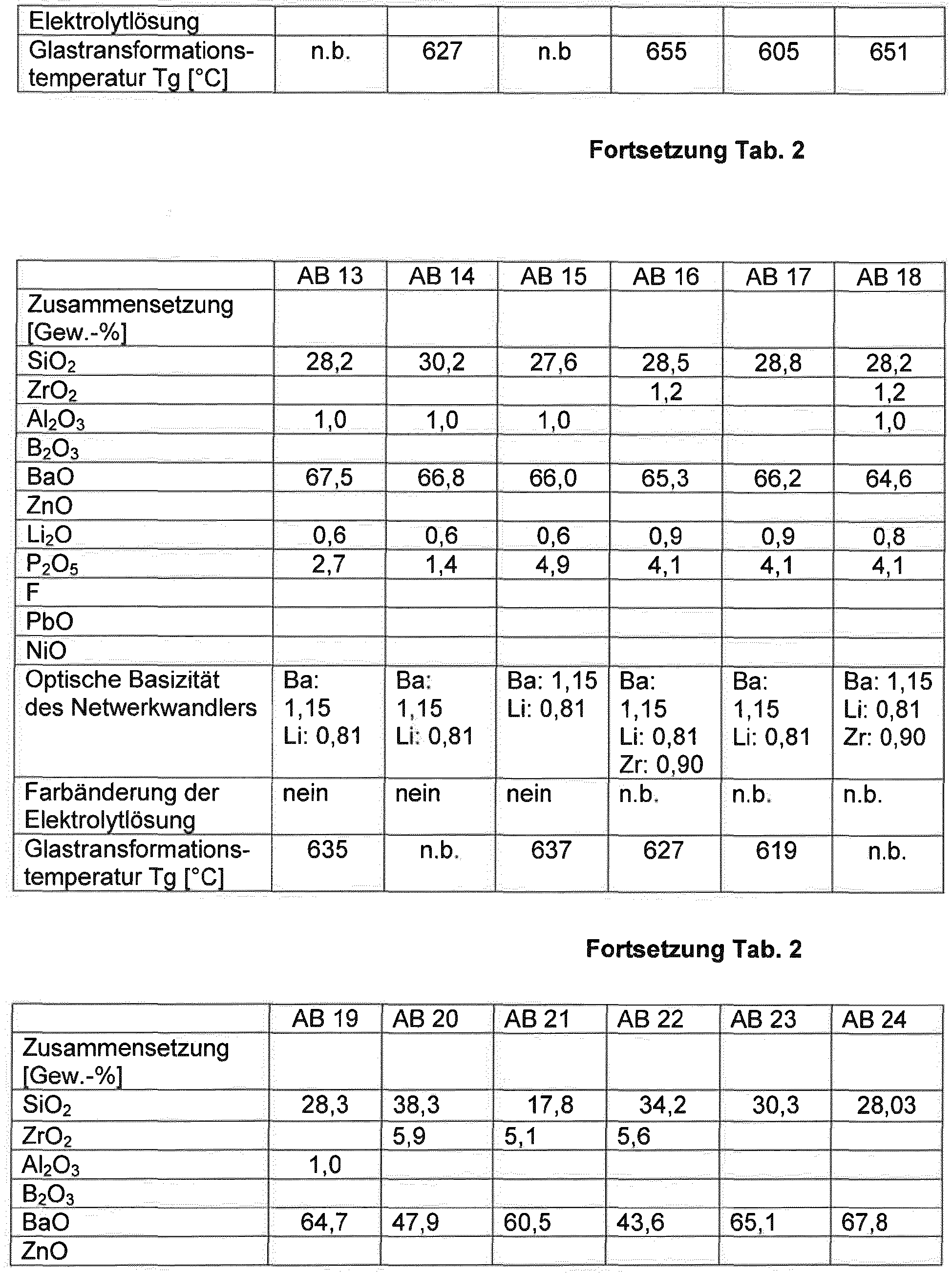

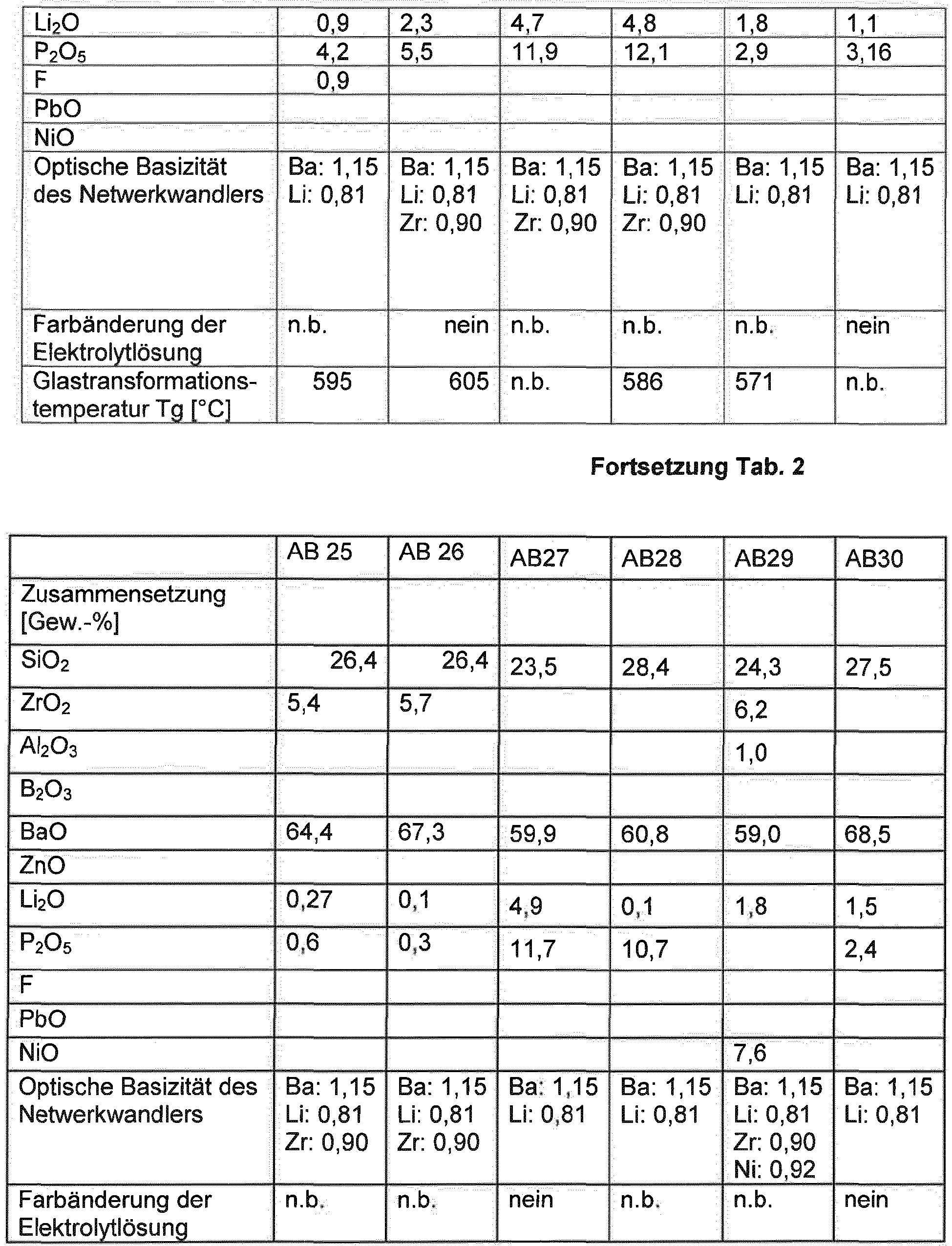

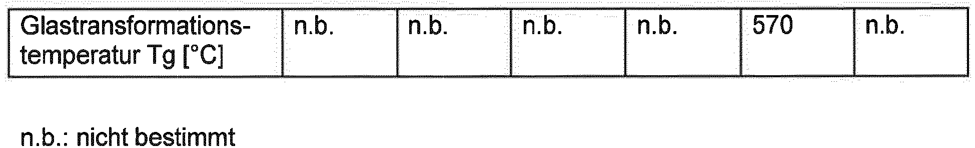

## Patentansprüche

1. Verwendung eines glasbasierten Materials als Additiv für einen wiederaufladbaren Lithium-Ionen-Akkumulator mit Flüssigelektrolyten oder Polymerelektrolyten zur Stabilisierung des Leitsalzes im Elektrolyten, wobei das glasbasierte Material aus Glas oder einer Glaskeramik besteht und zumindest folgende Bestandteile (in Gew.-% auf Oxidbasis) aufweist:
| | |
|---|---|
| SiO₂ | 15 - 45 |
| BaO | 10 - 80 |
| ZrO₂ | 0 - 15 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |
Läutermittel in üblichen Mengen von bis zu 2 Gew.-%,
wobei
| | |
|---|---|
| Li₂O + Al₂O₃ | ≥0,1 - 35 |
| Li₂O | 0,05-25 und |
| Al₂O₃ | 0,05-10 |
oder
| | |
|---|---|
| Li₂O + P₂O₅ | ≥0,1 - 45 |
| Li₂O | 0,05 - 25 und |
| P₂O₅ | 0,05 - 20 |
oder
| | |
|---|---|
| P₂O₅ + Al₂O₃ | ≥0,1 - 30 |
| P₂O₅ | 0,05 - 20 und |
| Al₂O₃ | 0,05-10; |
wobei das Additiv pulverförmig mit einer Oberfläche nach BET von mindestens 10 m²/g ausgebildet ist.

2. Verwendung des glasbasierten Materials nach Anspruch 1, wobei das glasbasierte Material zumindest folgende Bestandteile (in Gew.-% auf Oxidbasis) aufweist:
| | |
|---|---|
| SiO₂ | 20 - 40 |
| BaO | 40 - 80 |
| ZrO₂ | 0 - 8 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |
Läutermittel in üblichen Mengen von bis zu 2 Gew.-%,
wobei
| | |
|---|---|
| Li₂O + Al₂O₃ | ≥0,1 - 35 |
| Li₂O | 0,05-25 und |
| Al₂O₃ | 0,05-10 |
oder
| | |
|---|---|
| Li₂O + P₂O₅ | ≥0,1 - 45 |
| Li₂O | 0,05 - 25 und |
| P₂O₅ | 0,05 - 20 |
oder
| | |
|---|---|
| P₂O₅ + Al₂O₃ | ≥0,1 - 30 |
| P₂O₅ | 0,05 - 20 und |
| Al₂O₃ | 0,05-10. |

3. Verwendung des glasbasierten Materials nach Anspruch 1, wobei das glasbasierte Material zumindest folgende Bestandteile (in Gew.-% auf Oxidbasis) aufweist:
| | |
|---|---|
| SiO₂ | 15 - 45 |
| BaO | 40 - 80 |
| ZrO₂ | 0 - 15 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |
Läutermittel in üblichen Mengen von bis zu 2 Gew.-%,
wobei
| | |
|---|---|
| Li₂O + Al₂O₃ | ≥0,1 - 35 |
| Li₂O | 0,05-25 und |
| Al₂O₃ | 0,05-10 |
oder
| | |
|---|---|
| Li₂O + P₂O₅ | ≥0,1 - 45 |
| Li₂O | 0,05 - 25 und |
| P₂O₅ | 0,05 - 20 |
oder
| | |
|---|---|
| P₂O₅ + Al₂O₃ | ≥0,1 - 30 |
| P₂O₅ | 0,05 - 20 und |
| Al₂O₃ | 0,05-10. |

4. Verwendung des glasbasierten Materials nach Anspruch 1, wobei das glasbasierte Material zumindest folgende Bestandteile (in Gew.-% auf Oxidbasis) aufweist:
| | |
|---|---|
| SiO₂ | 15 - 45 |
| RO | 40 - 80 |
| ZrO₂ | 0 - 15 |
Läutermittel in üblichen Mengen von bis zu 2 Gew.-%, wobei
R = Ba oder Mg oder Ca,
wobei
| | |
|---|---|
| Li₂O + Al₂O₃ | ≥0,1 - 35 |
| Li₂O | 0,05-25 und |
| Al₂O₃ | 0,05-10 |
oder
| | |
|---|---|
| Li₂O + P₂O₅ | ≥0,1 - 45 |
| Li₂O | 0,05 - 25 und |
| P₂O₅ | 0,05 - 20 |
oder
| | |
|---|---|
| P₂O₅ + Al₂O₃ | ≥0,1 - 30 |
| P₂O₅ | 0,05 - 20 und |
| Al₂O₃ | 0,05-10. |

5. Verwendung nach einem der vorhergehenden Ansprüche, bei der das Additiv als pulverförmiges Additiv in den Akkumulator integriert ist, oder unter Beibehaltung der hohen Oberfläche des Pulvers, etwa durch Einbringung in einen Kunststoffbinder, als Beschichtung eines Separators integriert ist, oder als Teil einer Elektrode des Akkumulators integriert ist, oder auf die Oberfläche der Elektrode aufgebracht ist oder als Bechichtung eines den Akkumulator umschließenden Gehäuses ausgebildet ist.

6. Verwendung nach einem der vorhergehenden Ansprüche, bei welcher der Gehalt (in Gew.-% auf Oxidbasis) an Al₂O₃ größer 0,1, bevorzugt größer 0,5 ist, wobei der Gehalt an P₂O₅ bevorzugt größer 0,1, besonders bevorzugt größer 0,5 ist, und wobei der Gehalt an Li₂O bevorzugt größer 0,08, besonders bevorzugt größer 0,1 ist.

7. Verwendung nach einem der vorhergehenden Ansprüche, bei der als Läutermittel SnO₂, As₂O₃, Sb₂O₃, Schwefel oder CeO₂ verwendet werden.

8. Verwendung nach einem der Ansprüche 1 bis 4, bei der höchstens 0,1 Gew.-%, vorzugsweise höchstens 0,05 Gew.-% an polyvalenten Läutermitteln vorhanden ist.

9. Verwendung nach einem der vorhergehenden Ansprüche, bei der der Gehalt an Fe₂O₃, NiO, CuO, Bi₂O₃ jeweils 0,1 Gew.-%,vorzugsweise höchstens 0,05 Gew.-% beträgt.

10. Verwendung nach einem der vorhergehenden Ansprüche, wobei der Elektrolyt aus einer Mischung eines oder mehrerer nicht-wässriger, wasserfreier, aprotischer, bevorzugt carbonatischer Lösemittel, mit mindestens einem fluoridischen Leitsalz besteht.

11. Verwendung nach Anspruch 11, bei der LiPF₆ als Leitsalz verwendet wird, vorzugsweise LiPF₆ in Ethylencarbonat oder Diethylcarbonat.

12. Verwendung nach einem der vorhergehenden Ansprüche zur thermischen Stabilisierung einer Hochleistungszelle, insbesondere mit Hochvolt-Kathodenmaterialien, die mindestens ein Lithium-haltiges Übergangsmetall oder ein Lithium-haltiges Übergangsmetallphosphat aufweist.

## Claims

1. Use of a glass-based material as an additive for a rechargeable lithium ion accumulator comprising a liquid electrolyte or a polymer electrolyte for stabilizing the conducting salt within the electrolyte, wherein the glass-based material consists of glass or a glass ceramic and comprises at least the following components (in wt.-% on oxide basis):
| | |
|---|---|
| SiO₂ | 15 - 45 |
| BaO | 10 - 80 |
| ZrO₂ | 0 - 15 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |
refining agents in common amounts up to 2 wt.-%,
wherein
| | |
|---|---|
| Li₂O + Al₂O₃ | ≥0.1 - 35 |
| Li₂O | 0.05-25 and |
| Al₂O₃ | 0.05-10 |
or
| | |
|---|---|
| Li₂O + P₂O₅ | ≥0.1 - 45 |
| Li₂O | 0.05 - 25 and |
| P₂O₅ | 0.05 - 20 |
or
| | |
|---|---|
| P₂O₅ + Al₂O₃ | ≥0.1 - 30 |
| P₂O₅ | 0.05 - 20 and |
| Al₂O₃ | 0.05-10; |
wherein the additive is configured in powder form having a surface according to BET of at least 10 m²/g.

2. The use of the glass-based materials according to claim 1, wherein the glass-based material comprises at least following components (in wt.-% on oxide basis):
| | |
|---|---|
| SiO₂ | 20 - 40 |
| BaO | 40 - 80 |
| ZrO₂ | 0 - 8 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |
refining agents in common amounts up to 2 wt.-%,
wherein
| | |
|---|---|
| Li₂O + Al₂O₃ | ≥0.1 - 35 |
| Li₂O | 0.05-25 and |
| Al₂O₃ | 0.05-10 |
or
| | |
|---|---|
| Li₂O + P₂O₅ | ≥0.1 - 45 |
| Li₂O | 0.05 - 25 and |
| P₂O₅ | 0.05 - 20 |
or
| | |
|---|---|
| P₂O₅ + Al₂O₃ | ≥0.1 - 30 |
| P₂O₅ | 0.05 - 20 and |
| Al₂O₃ | 0.05-10. |

3. The use of the glass-based materials according to claim 1, wherein the glass-based material comprises at least following components (in wt.-% on oxide basis):
| | |
|---|---|
| SiO₂ | 15 - 45 |
| BaO | 40 - 80 |
| ZrO₂ | 0 - 15 |
| CaO | 0 - 30 |
| MgO | 0 - 30 |
| MgO+BaO+CaO +Li₂O+ZrO₂ | ≥ 30 |
| NiO | 0 - 10 |
| PbO | 0 - 10 |
| ZnO | 0 - 10 |
| F | 0 - 5, |
refining agents in common amounts up to 2 wt.-%,
wherein
| | |
|---|---|
| Li₂O + Al₂O₃ | ≥0.1 - 35 |
| Li₂O | 0.05-25 and |
| Al₂O₃ | 0.05-10 |
or
| | |
|---|---|
| Li₂O + P₂O₅ | ≥0.1 - 45 |
| Li₂O | 0.05 - 25 and |
| P₂O₅ | 0.05 - 20 |
or
| | |
|---|---|
| P₂O₅ + Al₂O₃ | ≥0.1 - 30 |
| P₂O₅ | 0.05 - 20 and |
| Al₂O₃ | 0.05-10. |

4. The use of the glass-based materials according to claim 1, wherein the glass-based material comprises at least following components (in wt.-% on oxide basis):
| | |
|---|---|
| SiO₂ | 15 - 45 |
| RO | 40 - 80 |
| ZrO₂ | 0 - 15 |
refining agents in common amounts up to 2 wt.-%, wherein
R = Ba or Mg or Ca,
wherein
| | |
|---|---|
| Li₂O + Al₂O₃ | ≥0.1 - 35 |
| Li₂O | 0.05-25 and |
| Al₂O₃ | 0.05-10 |
or
| | |
|---|---|
| Li₂O + P₂O₅ | ≥0.1 - 45 |
| Li₂O | 0.05 - 25 and |
| P₂O₅ | 0.05 - 20 |
or
| | |
|---|---|
| P₂O₅ + Al₂O₃ | ≥0.1 - 30 |
| P₂O₅ | 0.05 - 20 and |
| Al₂O₃ | 0.05-10. |

5. The use according to any of the preceding claims, wherein the additive is integrated into the accumulator as a powdery additive, or is integrated as a coating of a separator while keeping the large surface of the powder, i.e. by introducing into a plastic binder, or is integrated as a part of an electrode of the accumulator, or is applied onto the surface of the electrode or is configured as a coating of a housing surrounding the accumulator.

6. The use according to any of the preceding claims, wherein the content of Al₂O₃ (in wt.-% on oxide basis) is greater 0.1, preferably greater 0.5, wherein preferably P₂O₅ is greater 0.1, particularly preferred greater 0.5, and wherein preferably Li₂O is greater 0.08, particularly preferred greater 0.1.

7. The use according to any of the preceding claims, wherein SnO₂, As₂O₃, Sb₂O₃, sulfur or CeO₂ are used as refining agents.

8. The use according to any of claims 1 to 4, wherein polyvalent refining agents are present up to a maximum of 0.1 wt.-%, preferably to a maximum of 0.05 wt.-%.

9. The use according to any of the preceding claims, wherein the content of Fe₂O₃, NiO, CuO, Bi₂O₃ is a maximum of 0.1 wt.-% each, preferably of 0.05 wt.-% at the most.

10. The use according to any of the preceding claims, wherein the electrolyte consists of a mixture of one or more non-aqueous, water-free, aprotic solvents, preferably carbonatic solvents, comprising at least one fluoridic conducting salt.

11. The use according to claim 10, wherein LiPF₆ is used as a conducting salt, preferably LiPF₆ in ethylene carbonate or diethyl carbonate.

12. The use according to any of the preceding claims for thermally stabilizing a high-performance cell, in particular comprising high-voltage cathode materials, comprising at least one lithium-containing transition metal or a lithium-containing transition metal phosphate.

## Revendications

1. Utilisation d'un matériau à base de verre comme additif pour un accumulateur rechargeable aux ions lithium pourvu d'électrolytes liquides ou d'électrolytes polymères pour la stabilisation du sel conducteur dans l'électrolyte, le matériau à base de verre étant constitué de verre ou d'une vitrocéramique et présentant au moins les constituants suivants (en % en poids sur base d'oxyde) :
| | |
|---|---|
| SiO₂ | 15-45 |
| BaO | 10-80 |
| ZrO₂ | 0-15 |
| CaO | 0-30 |
| MgO | 0-30 |
| MgO + BaO + CaO +Li₂O+ZrO₂ | ≥ 30 |
| NiO | 0-10 |
| PbO | 0-10 |
| ZnO | 0-10 |
| F | 0-5, |
des agents d'affinage aux quantités usuelles de jusqu'à 2% en poids, où
| | |
|---|---|
| Li₂O + Al₂O₃ | ≥ 0,1-35 |
| Li₂O | 0,05-25 et |
| Al₂O₃ | 0,05-10 |
ou
| | |
|---|---|
| Li₂O + P₂O₅ | ≥ 0,1-45 |
| Li₂O | 0,05-25 et |
| P₂O₅ | 0,05-20 |
ou
| | |
|---|---|
| P₂O₅ + Al₂O₃ | ≥ 0,1-30 |
| P₂O₅ | 0,05-20 et |
| Al₂O₃ | 0,05-10 ; |
| | |
l'additif étant conçu sous forme de poudre et doté d'une surface selon BET d'au moins 10 m²/g.

2. Utilisation du matériau à base de verre selon la revendication 1, le matériau à base de verre présentant au moins les constituants suivants (en % en poids sur base d'oxyde) :
| | |
|---|---|
| SiO₂ | 20-40 |
| BaO | 40-80 |
| ZrO₂ | 0-8 |
| CaO | 0-30 |
| MgO | 0-30 |
| MgO + BaO + CaO + Li₂O + ZrO₂ | ≥ 30 |
| NiO | 0-10 |
| PbO | 0-10 |
| ZnO | 0-10 |
| F | 0-5, |
des agents d'affinage aux quantités usuelles de jusqu'à 2% en poids, où
| | |
|---|---|
| Li₂O + Al₂O₃ | ≥ 0,1-35 |
| Li₂O | 0,05-25 et |
| Al₂O₃ | 0,05-10 |
ou
| | |
|---|---|
| Li₂O + P₂O₅ | ≥ 0,1-45 |
| Li₂O | 0,05-25 et |
| P₂O₅ | 0,05-20 |
ou
| | |
|---|---|
| P₂O₅ + Al₂O₃ | ≥ 0,1-30 |
| P₂O₅ | 0,05-20 et |
| Al₂O₃ | 0,05-10. |

3. Utilisation du matériau à base de verre selon la revendication 1, le matériau à base de verre présentant au moins les constituants suivants (en % en poids sur base d'oxyde) :
| | |
|---|---|
| SiO₂ | 15-45 |
| BaO | 40-80 |
| ZrO₂ | 0-15 |
| CaO | 0-30 |
| MgO | 0-30 |
| MgO + BaO + CaO + Li₂O + ZrO₂ | ≥ 30 |
| NiO | 0 - 10 |
| PbO | 0-10 |
| ZnO | 0-10 |
| F | 0-5, |
des agents d'affinage aux quantités usuelles de jusqu'à 2% en poids, où
| | |
|---|---|
| Li₂O + Al₂O₃ | ≥ 0,1-35 |
| Li₂O | 0,05-25 et |
| Al₂O₃ | 0,05-10 |
ou
| | |
|---|---|
| Li₂O + P₂O₅ | ≥ 0,1-45 |
| Li₂O | 0,05-25 et |
| P₂O₅ | 0,05-20 |
ou
| | |
|---|---|
| P₂O₅ + Al₂O₃ | ≥ 0,1-30 |
| P₂O₅ | 0,05-20 et |
| Al₂O₃ | 0,05-10. |

4. Utilisation du matériau à base de verre selon la revendication 1, le matériau à base de verre présentant au moins les constituants suivants (en % en poids sur base d'oxyde) :
| | |
|---|---|
| SiO₂ | 15-45 |
| RO | 40-80 |
| ZrO₂ | 0-15 |
des agents d'affinage aux quantités usuelles de jusqu'à 2% en poids, où R = Ba ou Mg ou Ca, où
| | |
|---|---|
| Li₂O + Al₂O₃ | ≥ 0,1-35 |
| Li₂O | 0,05-25 et |
| Al₂O₃ | 0,05-10 |
ou
| | |
|---|---|
| Li₂O + P₂O₅ | ≥ 0,1-45 |
| Li₂O | 0,05-25 et |
| P₂O₅ | 0,05-20 |
ou
| | |
|---|---|
| P₂O₅ + Al₂O₃ | ≥ 0,1-30 |
| P₂O₅ | 0,05-20 et |
| Al₂O₃ | 0,05-10. |

5. Utilisation selon l'une quelconque des revendications précédentes, dans laquelle l'additif est intégré sous forme d'additif en poudre dans l'accumulateur, ou est intégré tout en conservant la surface élevée de la poudre, par exemple par introduction dans un liant en matériau synthétique, comme revêtement d'un séparateur ou intégré comme partie d'une électrode de l'accumulateur ou appliqué sur la surface de l'électrode ou conçu comme revêtement d'un boîtier entourant l'accumulateur.

6. Utilisation selon l'une quelconque des revendications précédentes, dans laquelle la teneur (en % en poids sur base d'oxyde) en Al₂O₃ est supérieure à 0,1, de préférence supérieure à 0,5, la teneur en P₂O₅ étant de préférence supérieure à 0,1, de manière particulièrement préférée supérieure à 0,5 et la teneur en Li₂O étant de préférence supérieure à 0,08, de manière particulièrement préférée supérieure à 0,1.

7. Utilisation selon l'une quelconque des revendications précédentes, dans laquelle SnO₂, As₂O₃, Sb₂O₃, soufre ou CeO₂ sont utilisés comme agent d'affinage.

8. Utilisation selon l'une quelconque des revendications 1 à 4, dans laquelle au plus 0,1% en poids, de préférence au plus 0,05% en poids d'agents d'affinage polyvalents est présent.

9. Utilisation selon l'une quelconque des revendications précédentes, dans laquelle la teneur en Fe₂O₃, en NiO, en CuO, en Bi₂O₃ est à chaque fois de 0,1% en poids, de préférence d'au plus 0,05% en poids.

10. Utilisation selon l'une quelconque des revendications précédentes, l'électrolyte étant constitué d'un mélange d'un ou de plusieurs solvants non aqueux, anhydres, aprotiques, de préférence carbonatés, présentant au moins un sel conducteur fluoré.

11. Utilisation selon la revendication 10, dans laquelle du LiPF₆ est utilisé comme sel conducteur, de préférence du LiPF₆ dans du carbonate d'éthylène ou du carbonate de diéthyle.

12. Utilisation selon l'une quelconque des revendications précédentes pour la stabilisation thermique d'une pile de forte puissance, présentant en particulier des matériaux cathodiques à haute tension, qui présente au moins un métal de transition contenant du lithium ou un phosphate de métal de transition contenant du lithium.
